Europäisches Patentamt

European Patent Office

Office européen des brevets

(19)

(11) **EP 0 683 954 B1**

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(21) Anmeldenummer: **94906221.0**

(22) Anmeldetag: **04.02.1994**

(51) Int Cl.$^6$: **H04N 1/40**

(86) Internationale Anmeldenummer:
**PCT/EP94/00323**

(87) Internationale Veröffentlichungsnummer:
**WO 94/18786 (18.08.1994 Gazette 1994/19)**

(54) **VERFAHREN UND ANORDNUNG ZUR ERZEUGUNG VON RASTERDRUCK HOHER QUALITÄT MIT EINER ELEKTROFOTOGRAFISCHEN DRUCKEINRICHTUNG**

HIGH QUALITY MATRIX PRINTING PROCESS AND SYSTEM USING ELECTROPHOTOGRAPHIC PRINTING EQUIPMENT

PROCEDE ET DISPOSITIF D'IMPRESSION PAR POINTS DE HAUTE QUALITE AU MOYEN D'UN SYSTEME D'IMPRESSION ELECTROPHOTOGRAPHIQUE

(84) Benannte Vertragsstaaten:
**DE FR GB NL**

(30) Priorität: **10.02.1993 EP 93102070**

(43) Veröffentlichungstag der Anmeldung:
**29.11.1995 Patentblatt 1995/48**

(60) Teilanmeldung: **95111055.0 / 0 677 948**

(73) Patentinhaber: **Océ Printing Systems GmbH**
**85586 Poing (DE)**

(72) Erfinder:
• **SCHLEUSENER, Martin**
**D-85604 Zorneding (DE)**
• **MÄSS, Volkhard**
**D-85435 Altenerding (DE)**
• **MORRIS, Edward**
**D-85435 Erding (DE)**

(74) Vertreter: **Schaumburg, Thoenes & Thurn**
**Mauerkircherstrasse 31**
**81679 München (DE)**

(56) Entgegenhaltungen:
EP-A- 0 190 901          EP-A- 0 225 697
WO-A-92/01353          US-A- 4 985 779

**Beschreibung**

Die Erfindung betrifft ein elektrofotografisches Verfahren und eine Anordnung zur Erzeugung von einem über Tonerantragsmittel einfärbbaren, durch eine Einfärbungsgrenze einstellbaren Verlaufs begrenzten Makroladungsbereich auf einem Fotoleiter eines Druck- oder Kopiergerätes unter Verwendung mindestens einer belichtungs- und positionsvariablen steuerbaren Lichtquelle.

Bei elektrofotografischen Druckeinrichtungen ist es bisher üblich, Zeichen und Halbtonbilder durch Punkteraster darzustellen, die aus einzelnen eingefärbten Punkten vorgegebener Größe bestehen. Grauabstufungen erreicht man durch eine Matrixanordnung, z.B. in Form eines Dither-Rasters oder andere Raster. Derartige Raster haben jedoch eine ungünstige Relation von Auflösung und Grauabstufen und beinhalten die Gefahr der Rasterkonturen- und der Moirébildung, was die erzielbare Druckqualität beschränkt.

Zwar ist es aus der US-A- 4 809 021 bekannt, durch Variation der Intensität oder des Durchmessers des Laserstrahls eine Druckqualitätserhöhung dadurch zu erreichen, daß Punkte verschiedener Größe erzeugt werden, die Form der Punkte ist jedoch vorgegeben. Durch diese vorgegebene Form der Rasterpunkte in Verbindung mit der vorgegebenen Punktgröße ist es bisher nicht möglich mit Hilfe von elektrofotografischen Druckeinrichtungen offsetartige Druckqualität sowohl hinsichtlich der Halbtondarstellung als auch hinsichtlich der Schriftzeichen- und Liniendruckdarstellung zu erreichen.

Aufgabe der Erfindung ist es deshalb für eine elektrofotografische Druckeinrichtung ein Verfahren und eine Anordnung bereitzustellen, die sowohl hinsichtlich einer Halbtondarstellung als auch hinsichtlich Schriftzeichen und Liniendruck eine hohe Druckqualität ermöglicht.

Ein weiteres Ziel der Erfindung ist es, das Verfahren und die Anordnung so auszubilden, daß ein fein abgestufter offsetartiger Rasterdruck möglich ist.

Diese Aufgabe wird gemäß den Merkmalen der Patentansprüche 1 und 9 gelöst.

Vorteilhafte Ausführungsformen der Erfindung sind in den Unteransprüchen gekennzeichnet.

Zur Grauwertdarstellung eines Halbtonbildes wird die Fläche eines Halbtonbildes in Makropixel eingeteilt, deren Größe im Integrationsbereich des menschlichen Auges liegt. Jedes Makropixel wird wiederum in Mikropixel aufgeteilt. Die Schriftzeichenflächen werden ebenfalls in Mikropixel aufgeteilt, wobei jedes Zeichen durch einen spezifischen Mikropixelsatz realisiert wird. Zur Erzeugung der Zeichen mit Hilfe einer elektrofotografischen Druckeinrichtung wird der Fotoleiter der Druckeinrichtung gleichförmig aufgeladen und nachfolgend mit einer Pixelstruktur belichtet, die durch Tonerablagerung entwickelt wird.

Eine quasi kontinuierlich abstufbare Makropixeleinfärbung erreicht man durch Belichtung der Mikropixel mittels einer Belichtungsvorrichtung, die eine Abstufung von mehreren Helligkeits- bzw. Belichtungswerten je Mikropixel gestattet, z.B. einem LED-Zeichengenerator mit variabler Lichtenergieemission je Mikropixel oder durch einen intensitätsabhängig gesteuerten Laserstrahl. Die Belichtung der Mikropixel wird derart gesteuert, daß für jedes Makropixel eine Potentialmulde entsteht, die in der nachfolgenden Entwicklung zu einer definierten Einfärbung führt. Bei Entwicklung der belichteten Fotoleiterstellen, die bei elektrofotografischen Druckern überwiegend eingesetzt wird, werden diejenigen Flächenanteile der Potentialmuldenstruktur eingefärbt, deren Potentialwert unterhalb des Biaspotentials aer Entwicklerstation liegt, wobei das Biaspotential die Einfärbungsgrenze festlegt. Das Verfahren ist dabei sowohl für die Umkehrentwicklung als auch für die Direktentwicklung geeignet.

Der integrale Grauwert einer gerasteten Fläche wird durch den Rastertonwert bestimmt, der dem Verhältnis der mit Toner bedeckten Fläche zur tonerfreien Fläche im Makropixel entspricht. Auch die Form dieser Flächenanteile hat einen Einfluß auf den Eindruck der Graufläche im menschlichen Auge. Über die Verteilung der Mikropixelbelichtung im Makropixel kann auch die im Offsetdruck übliche Rasterpunktform angenähert werden. Damit ist einerseits eine optimierte Relation von Auflösung und Grauwert-Abstufung und andererseits auch eine Anpassung an übliche Sehgewohnheiten erreichbar.

Analog zur Formung der Rasterkonturen wird die Kontur der Zeichen und Linien durch die Ausbildung einer Potentialmuldenstruktur bzw. eines Potentialreliefs und dessen Schnittebene mit dem Biaspotentialniveau der Entwicklerstation gebildet.

Bei der Ausformung der Halbtonraster, der Schriftzeichen und gekrümmter sowie schräger Linien und bei Grafik, kann die Potentialmuldenstruktur so an die speziellen Wiedergabeeigenschaften des real eingesetzten elektrofotografischen Prozesses angepaßt werden, daß dessen Schwächen zielgerichtet kompensiert werden. Hierzu gehören alle Dichteverzerrungen durch Nachbar- und Kanteneffekte, wie die ungleichmäßige Einfärbung von Linien parallel oder quer zur Entwicklungsrichtung sowie feiner und breiter Linien und Großflächen.

Durch eine asymmetrische Belichtungsenergieverteilung der Mikropixel im Makropixel kann die X-Y-Asymmetrie, die in der Belichtungsverteilung der Mikropixel bei hohen Druckgeschwindigkeiten entstehen, firmwareseitig kompensiert werden. Somit kann bei gleicher Lichtquellenemissionsflächenform, z.B. von LED's bei der Verwendunq eines LED-Kammes, bei unterschiedlichen Druckgeschwindigkeiten eine gleichwertige Makropixelsymmetrie erreicht werden.

Die Reproduzierbarkeit der Rastergrauwerte sowie der Zeichen- und Linienkonturen wird durch die Verwendung von Fotoleitern und Entwicklern hoher Kennlinienstabilität in Verbindung mit einer Rasterkennlinien-Regelung erreicht. Die Gesamtgradation des elektrofotografischen Prozesses ist in Analogie zur Gradation reprografischer Materialien hinreichend steil dimensioniert.

Die insbesondere die Reproduzierbarkeit des verwendeten Druckrasters und damit die Druckqualität garantierende Rasterkennlinienregelung besteht vorzugsweise aus zwei Regelkomponenten, wobei die erste Regelkomponente das elektrostatische Potentialrelief stabilisiert und die zweite Regelkomponente für die Konstanthaltung der Einfärbungskennlinie auf dem Potentialrelief sorgt.

Die Erfindung ermöglicht eine quasi analoge Darstellung von Halbtonbildern und Linien beliebiger Form. Allein die Größe der die Ladungsbereiche einfärbenden Tonerpartikel setzt hier eine Grenze.

Ausführungsformen der Erfindung sind in den Zeichnungen dargestellt und werden im folgenden beispielsweise näher beschrieben. Es zeigen

Figur 1 eine schematische Darstellung einer elektrofotografischen Druckeinrichtung mit zugehöriger Ansteueranordnung,

Figur 2 eine schematische Darstellung eines Makropixels aus neun Mikropixeln,

Figur 3 eine Darstellung des Entladepotentials auf dem Fotoleiter in Abhängigkeit von der Belichtung bei einer 3-Bit-Belichtungsabstufung,

Figur 4 eine Darstellung der Belichtungsprofile für ein Mikropixel bei einer 3-Bit-Belichtungsabstufung und Figur 5 eine Darstellung des Potentialreliefs für ein Mikropixel bei einer 3-Bit-Belichtungsabstufung,

Figuren 6 und 7 eine Schnittdarstellung der Erzeugung von Potentialmulden durch Mikropixel mit variabler Belichtung,

Figur 8 eine schematische Darstellung einer in Makropixeln erzeugbaren offsetartigen Rasterform mit einem Rastertonwert von ca. 10 %,

Figur 9 eine schematische Darstellung einer in denselben Makropixeln erzeugbaren offsetartigen Rasterform mit einem Rastertonwert von 35 %,

Figur 10 eine schematische Darstellung einer in denselben Makropixeln erzeugbaren offsetartigen Rasterform mit einem Rastertonwert von ca. 60 %,

Figur 11 ein schematisches Blockschaltbild einer Druckkopfansteuerung für einen LED-Kamm,

Figur 12 eine schematische Darstellung des Aufbaus der in der Druckkopfansteuerung der Figur 11 verwendeten IC-B,

Figur 13 eine schematische Darstellung der Belichtungsregelung durch Anpassung der mittleren Belichtung an die aktuelle Fotoleiterkennlinie und

Figur 14 eine schematische Vierquadrantendarstellung der Einfärbungsregelung.

Grundsätzliche Überlegungen

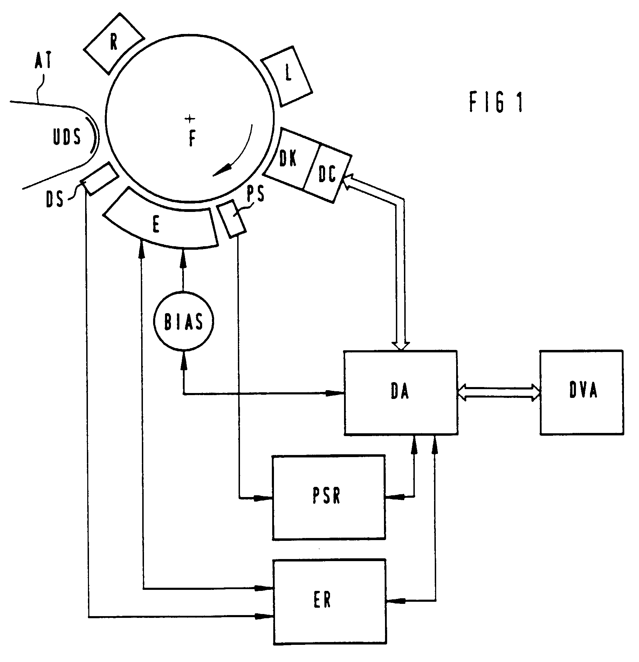

Ein in der Figur 1 schematisch dargestellter elektrofotografischer Drucker enthält eine elektromotorisch antreibbare Fotoleitertrommel F. Um die Fotoleitertrommel F gruppiert sind die für den elektrofotografischen Prozeß erforderlichen Aggregate wie Belichtungseinrichtung DK, Entwicklerstation E, Umdruckstation UDS, Reinigungsstation R und Ladeeinrichtung L. Beim elektrofotografischen Prozeß wird die Fotoleitertrommel F mit Hilfe der Ladeeinrichtung L auf etwa 500 V gleichmäßig aufgeladen und dann mit Hilfe der Belichungseinrichtung DK bis in den Bereich von etwa 70 V entladen und so ein latentes Zeichenbild erzeugt. Dieses so erzeugte latente Zeichenbild wird dann in üblicher Weise in der Entwicklerstation E mit Hilfe eines Zweikomponentengemisches aus Tonerteilchen und ferromagnetischen Trägerteilchen eingefärbt. Die Tonerteilchen sind triboelektrisch positiv aufgeladen. Zwischen der Entwicklerwalze, die auf einem Biaspotential von 220 V liegt und den auf etwa 70 V entladenen Bereichen des latenten Zeichenbildes entsteht ein Feld, wodurch sich die Tonerteilchen auf den entladenen Bereichen anlagern. Von den nichtbelichteten Flächen mit einer Aufladespannung von etwa 500 V werden die Tonerteilchen abgestoßen. Das so erzeugte Tonerbild wird dann in üblicher Weise in der Umdruckstation UDS auf einen Aufzeichnungsträger AT übertragen und die Fotoleitertrommel F in der Reinigungsstation R von anhaftenden Resttonerteilchen befreit. Danach beginnt der elektrofotografische Prozeß erneut durch Aufladung der Fotoleitertrommel über die Ladestation L.

Als Belichtungseinrichtung DK kann jede, in ihrer auf die Fotoleitertrommel abstrahlenden Lichtenergie variable ansteuerbare Lichtquelle verwendet werden, z.B. ein Laser oder wie in diesem Fall ein LED-Kamm wie er hinsichtlich seines geometrischen Aufbaues in der EP-B1-0 275 254 beschrieben ist.

Maßgebend für den Entladevorgang auf der Fotoleitertrommeloberfläche ist die von der Belichtungseinrichtung abgegebene Lichtenergie. Somit ist es bei der Verwendung von LED's als Lichtquelle möglich, die abgegebene Lichtenergie durch Variation der Einschaltzeit oder durch den Erregerstrom oder durch eine Kombination zu steuern.

LED-Zeichengeneratoren mit einzeln ansteuerbaren LED's haben hinsichtlich der Einzel-LED's eine etwa kegelförmige Abstrahlungscharakteristik. Dies ist einerseits bedingt durch die etwa kreisförmig ausgestaltete LED-Struktur, andererseits durch eine zwischen den LED's und der Fotoleitertrommel angeordnete Fokussieroptik, die den LED-Leuchtpunkt auf der Fotoleitertrommel punktförmig abbildet. Bedingt durch diese kegelförmige Lichtintensitätsverteilung über den Leuchtpunkt ergibt sich bei der Belichtung der Fotoleitertrommel eine entsprechende kegelförmige Entladestruktur, die im folgenden als Potentialmulde bezeichnet wird. Sind mehrere LED's an der Bildung einer solchen Potentialmulde beteiligt, so ergibt sich ein Potentialrelief aus einzelnen benachbarten Endladebereichen. Dabei ist jedoch anzumerken, daß dieses Potentialrelief auch mit Hilfe einer einzigen Lichtquelle erzeugt werden kann, wenn z.B. ein bestimmter Bereich der Fotoleitertrommel nacheinander an unterschiedlichen Orten belichtet wird. Der Ort der Belichtung auf der Fotoleitertrommel wird einerseits bestimmt durch den Erregungszeitpunkt bei bewegter Fotoleitertrommel und durch die Position des einzelnen LED's auf dem LED-Kamm. Ähnliches gilt für einen über eine Ablenkeinrichtung abgelenkten Laserstrahl.

Für den Einfärbungsgrad und die Größe der mit Toner einfärbbaren Fläche auf dem Fotoleiter entscheidend ist die Gestalt des erzeugten Potentialreliefes und die angelegte Biasspannung, da diese die Einfärbungsgrenze auf dem Potentialrelief bestimmt. Damit läßt sich durch Steuerung der Lichtenergie der Lichtquelle und der Strahlungsposition auf dem Fotoleiter und durch Steuerung der zwischen Fotoleiter und Tonerantragsmittel (Entwicklerstation E) anlegbaren Biasspannung auf dem Fotoleiter ein elektrostatisches Potentialrelief lichtenergieabhängiger Größe erzeugen und die Einfärbungsgrenze festlegen, deren Verlauf bestimmt ist durch das Biasspannungsniveau auf dem Potentialrelief. Dieses der Erfindung zugrundeliegende Prinzip soll nun näher erläutert werden:

Zur Darstellung einer Fläche eines Halbtonbildes wird die Fläche in ein Raster aus Makropixeln MAK (Figur 2) eingeteilt, deren Größe im Integrationsbereich des menschlichen Auges liegt. Jedes Makropixel MAK wird wiederum in Mikropixel MIK aufgeteilt, so daß in dem dargestellten Beispiel der Makropixel MAK aus $3 \times 3 = 9$ Mikropixeln besteht. Auch die Schriftzeichenflächen werden in Mikropixel unterteilt, wobei jedes Zeichen durch einen spezifischen Mikropixelsatz realisiert wird. Bei dem dargestellten Beispiel der Figur 2 erfolgt die Erzeugung der Mikropixel mit Hilfe eines 600 dpi-LED-Zeichengenerators mit einer Mikropixelgröße von ca. $40 \mu \times 40 \mu$. Daraus resultiert eine Makropixelgröße von $120 \mu \times 120 \mu$ entsprechend 8,2 Rasterpunkten je Millimeter in Kantenrichtung. Vorteilhafter Weise wird dabei jedem Mikropixel eine Lichtquelle in Form eines LED's zugeordnet. Allgemein wird zur Darstellung eines Zeichens der Fotoleiter F gleichförmig aufgeladen und nachfolgend mit einer Pixelstruktur belichtet, die durch Tonerablagerung entwickelt wird. Zur Erzeugung einer quasi kontinuierlich abstufbaren Makropixel-Einfärbung wird die Belichtung der Mikropixel MIK mittels der Belichtungsvorrichtung DK vorgenommen, die eine Abstufung von mehreren Helligkeits- bzw. Belichtungswerten je Mikropixel gestattet, z.B. in dem dargestellten Beispiel mit Hilfe eines LED-Zeichengenerators mit variabler Lichtenergieemission je Mikropixel oder mit Hilfe eines in seiner Intensität steuerbaren Laserstrahls. Die Belichtung der Mikropixel wird dabei derart gesteuert, daß für jedes Makropixel eine Potentialmulde entsteht, die in der nachfolgenden Entwicklung zu einer definierten Einfärbung führt. Dabei werden diejenigen Flächenanteile der Potentialmuldenstruktur eingefärbt, deren Potentialwert unterhalb des Biaspotentials der Entwicklerstation liegt.

Der integrale Grauwert einer gerasteten Fläche wird üblicherweise durch den Rastertonwert $\phi$ bestimmt, der dem Verhältnis der mit Toner bedeckten Fläche zur tonerfreien Fläche im Makropixel entspricht. Auch die Form dieser Flächenanteile hat einen Einfluß auf den Eindruck der Graufläche im menschlichen Auge.

Über die Verteilung der Mikropixelbelichtung im Makropixel läßt sich die im Offsetdruck übliche Rasterpunktform annähern, damit kann einerseits eine optimierte Relation von Auflösung und Grauwertabstufung und andererseits eine Anpassung an übliche Sehgewohnheiten erreicht werden. Analog zur Formung der Rasterkonturen wird dabei die Kontur der Zeichen und Linien durch die Ausbildung einer Potentialmuldenstruktur und deren Schnittebene mit dem Biaspotentialniveau der Entwicklerstation gebildet.

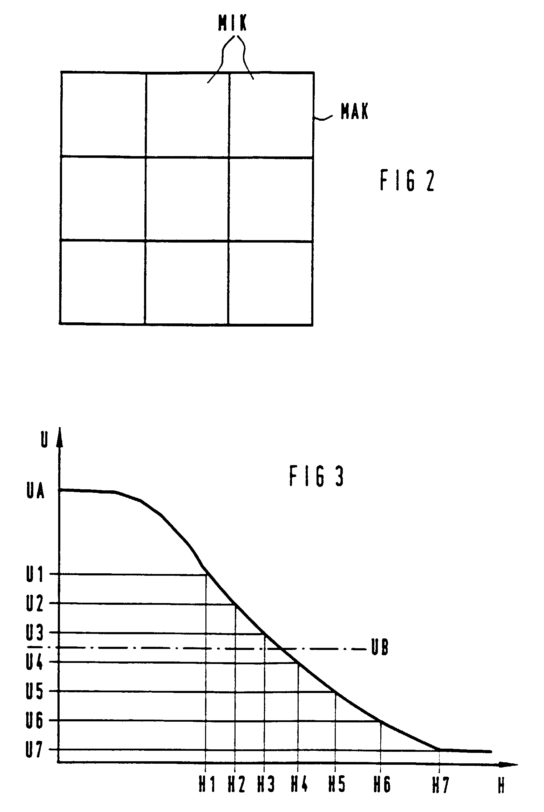

Um diese Strukturen zu erzeugen, müssen die Lichtquellen der Belichtungseinrichtung DK bezüglich ihrer abgebbaren Lichtenergie mehrstufig ansteuerbar sein. Als ausreichend hat sich eine achtstufige Belichtungsabstufung herausgestellt, die über ein 3-Bit-Datenwort codierbar ist. Der Zusammenhang zwischen den verschiedenen Belichtungsstufen und dem resultierenden Potentialwert einer entsprechend belichteten Fläche, ist in der Figur 3 dargestellt. Die Figur 3 zeigt dabei den Kennlinienverlauf einer Fotoleitertrommel mit einem spezifischen Fotoleitermaterial. Die Werte H1 bis H7 bezeichnen die Belichtung, d.h. die von den Lichtquellen (LED) abgestrahlte Lichtenergie je Fläche, z.B. in der Dimensionseinheit (Mikrojoule je cm$^2$). Die Werte U1 bis U7 das resultierende Potentialniveau auf dem Fotoleiter F in Volt nach der Belichtung ausgehend von einem Aufladepotential UA. UB das Biasspannungsniveau.

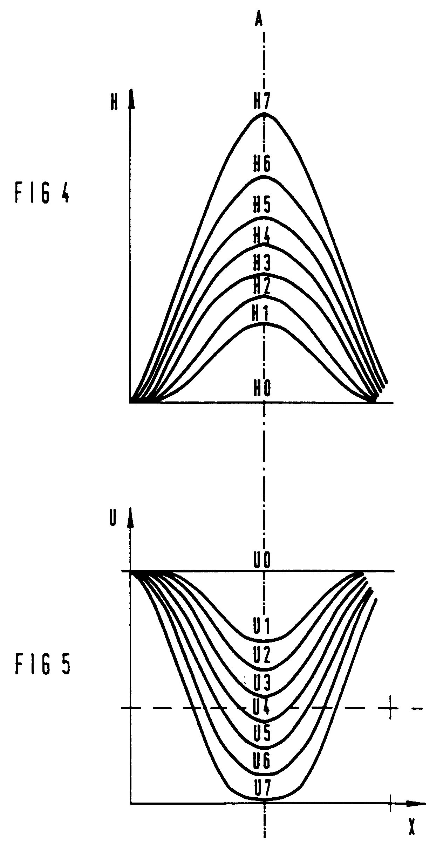

Wie eingangs bereits erläutert haben LED-Lichtquellen und Laserstrahlen eine etwa kegelförmige Lichtintensitätsverteilung. Der Kurvenverlauf ändert sich jedoch mit der Belichtungsstufe und damit mit der Lichtenergie. Die Intensitätsverteilung längs der Wegstrecke X und damit das Belichtungsprofil bei einer 3 Bit-Belichtungsabstufung entsprechend der Figur 3 ist in der Figur 4 dargestellt.

Die achtstufige Belichtung mit Belichtungsprofilen H0 bis H7 führt zu einer Potentialreliefstruktur entsprechend der Darstellung der Figur 5. Die Belichtung mit einem Mikropixel mit einer Intensität H1 führt damit zu einer Potentialmulde U1 mit entsprechendem Potentialverlauf. In entsprechender Weise sind die Belichtungsstufen H2 bis H7 den Potentialverläufen U2 bis U7 zugeordnet.

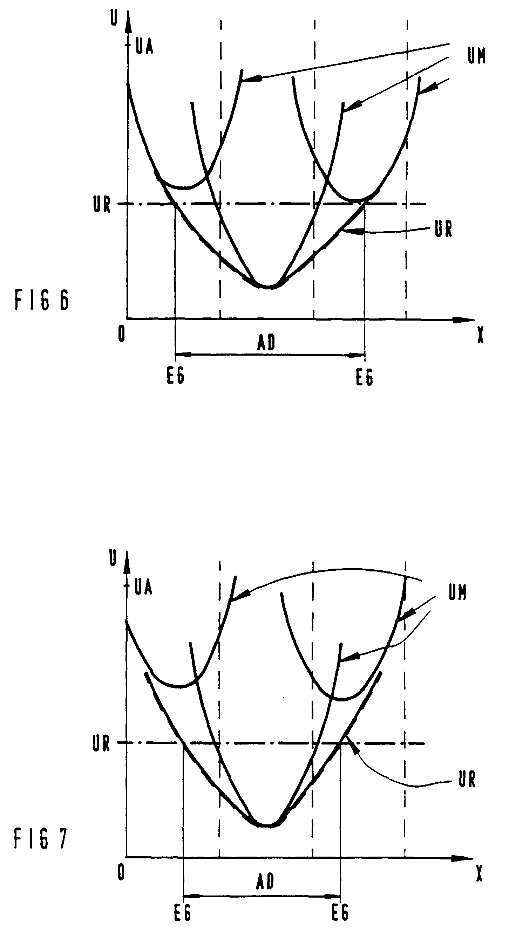

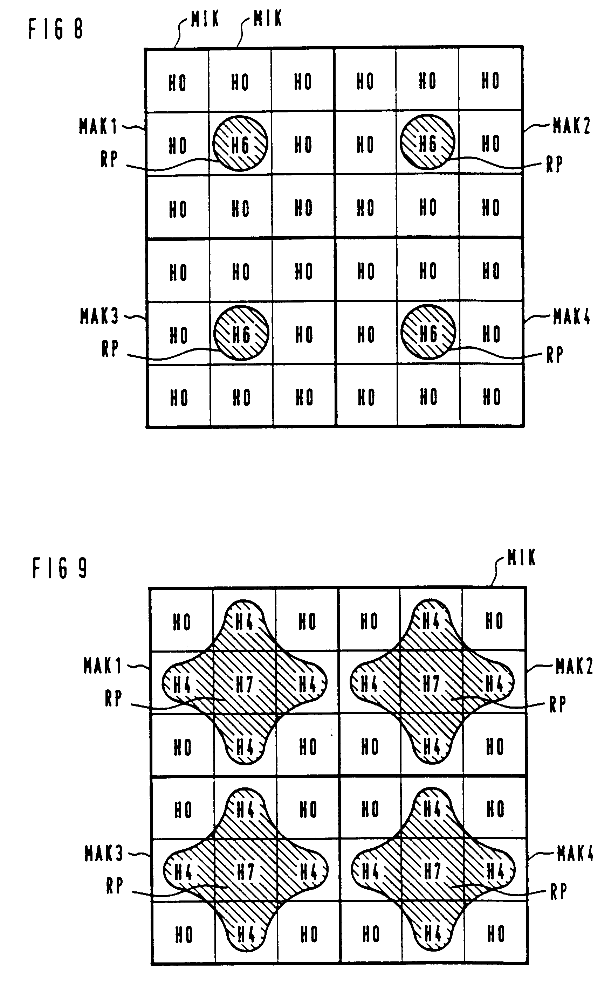

Zur Erzeugung eines Makropixels MAK vorgegebener Form (Figur 3) wird die Belichtung (Belichtungskegel UM) der Mikropixel MIK derart gesteuert, daß entsprechend der Figuren 6 und 7 für jedes Makropixel MAK eine resultierende Potentialmulde UR entsteht, die mit Toner eingefärbt wird. Die Gestalt der resultierenden Potentialmulde UR im Makropixel MAK hängt von der Belichtungsverteilung H und damit von der Lichtenergie der beteiligten Mikropixelbelichtungskegel UM ab. Der Verlauf der Einfärbungsgrenze EG, d.h. der Bereich in dem sich Toner anlagert, ist bestimmt durch die Schnittlinie zwischen der Biasspannung UB und der resultierenden Potentialmulde UR im Makropixel MAK. Das bedeutet die Einfärbungsgrenze EG des Makroladungsbereiches UR ist bestimmt durch den Verlauf des Biasspannungsniveaus UB auf dem elektrostatischen Potentialrelief UR aus einzelnen benachbarten Mikroladungsbereichen UM. AD bezeichnet dabeiden Abstand zweier gegenüberliegender Punkte auf der Grenzlinie der eingefärbten Fläche.

Wie aus den Figuren 6 und 7 ersichtlich, läßt sich der Verlauf der Einfärbungsgrenze EG und damit der Verlauf der im Makropixel MAK erzeugten Einfärbestruktur dadurch festlegen, daß bei vorgegebenem Aufladepotential UA und vorgegebenem Biaspotential UB über die Mikropixelbelichtungskegel UM eine der Einfärbestruktur entsprechende resultierende Potentialmulde UR im Makropixel MAK erzeugt wird. Ebenso kann bei vorgebenem Potentialrelief UR der resultierenden Potentialmulde im Makropixel zur Festlegung der Einfärbungsgrenzen EG die Biasspannung UB variiert werden. Auch eine Kombination beider Verfahren ist möglich.

Damit über die benachbarten Mikropixelbelichtungskegel UM eine resultierende Potentialmulde UR in optimaler Weise erzeugt werden kann, ist einerseits eine Lichtintensitätsverteilung (H über X) notwendig, die derart bemessen ist, daß ausgehend von einem Zentrum A (Figur 4) hoher Intensität, die Intensität H nach außen (X, -X) hin homogen abfällt, andererseits ist eine hinreichende Überlappung der benachbarten Mikropixelbelichtungskegel UM erforderlich. Als Maß für die Überlappung kann dabei der Überlappungsfaktor $f_u$ dienen, der definiert ist als das Verhältnis des Pixeldurchmessers d (Leuchtpunktdurchmesser) bei 12,5 % der maximalen Pixelenergiedichte (Leuchtpunktenergiedichte) zum Grundrastermaß dr. Das Grundrastermaß bezeichnet dabei den Abstand der Zentren zweier Pixel oder Leuchtpunkte

$$f_u = \frac{d}{dr}$$

Die minimale Überlappung sollte bei $f_u$ größer 1 liegen. Die obere Grenze der Überlappung kann bei $f_u = 4$ und darüber liegen. Die praktische obere Grenze ist abhängig von der Relation der Zeichengeneratorauflösung zur angestrebten kleinsten zu druckenden Abmessung. Für einen Zeichengenerator mit einer Auflösung von 600 Dot/Inch und einem kleinsten zu druckenden Punktdurchmesser von 0,1 mm ist eine Überlappung bis etwa $f_u = 4$ möglich.

Durch Variation des Potentialreliefs UR und der Biasspannung UB und damit durch Festlegung der Einfärbungsgrenze EG kann innerhalb des Makropixels MAK eine beliebige einfärbbare Kontur erzeugt werden. Damit ist es auch möglich entsprechend den Darstellungen der Figuren 8 bis 10 die im Offsetdruck übliche Rasterpunktform zu erzeugen und damit einerseits eine optimierte Relation von Auflösung und Grauwertabstufung und andererseits eine Anpassung an übliche Sehgewohnheiten zu erreichen.

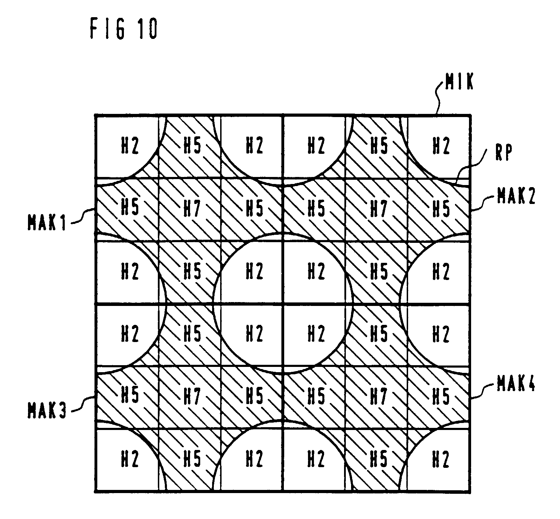

Zur Erzeugung einer Rasterfläche RP in Makropixeln MAK1 bis MAK4 mit unterschiedlichen Rastertonwerten φ werden innerhalb der Makropixel MAK1 bis MAK4 (Figur 8) in den einzelnen Mikropixelbereichen MIK Belichtungskegel UM mit Belichtungsstufen entsprechend den Belichtungsstufen H0 bis H7 erzeugt. Die Biasspannung UB ist dabei vorgegeben, so daß die Einfärbungsgrenze der Rasterflächen RP und damit die Einfärbungsfläche selbst bestimmt wird durch die Variation der Belichtung der Mikropixel MIK. Die den Mikropixeln zugeordneten Lichtenergien H0 bis H7 entsprechend einer 3-Bit-Belichtungsabstufung (Figur 3 bis 5) sind in den Figuren 8 bis 10 angegeben. Daraus resultieren Rasterflächenformen RP mit unterschiedlichen Rastertonwerten, wie sie im Offsetdruck üblich sind. Die Figur 8 stellt dabei eine Rasterpunktform mit einem Rastertonwert φ von ca. 10 % dar, die Figur 9 eine Rasterpunktform oder Rasterfläche mit einem Rastertonwert von φ = 35 % und die Figur 10 eine Rasterpunktform mit einem Rastertonwert von ca. φ = 60 %.

Ausführungsbeispiel

Ein Ausführungsbeispiel der Erfindung wird im folgenden anhand der Figuren 1, 11 bis 14 näher beschrieben.

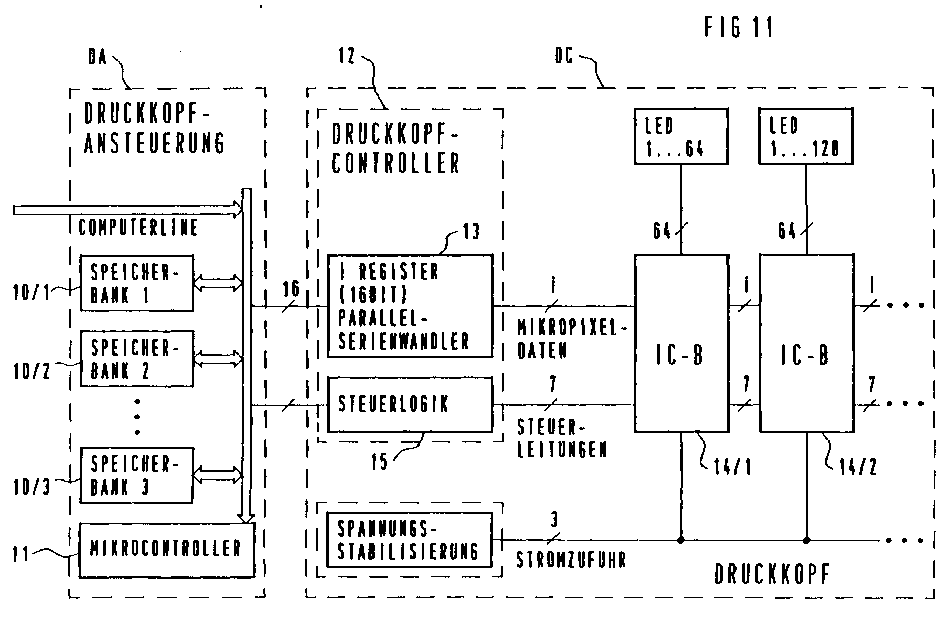

Die bereits eingangs allgemein beschriebene elektrofotografische Druckeinrichtung enthält als steuerbare Lichtquelle DK einen LED-Zeichengenerator (Druckkopf) mit einer Vielzahl von einzeln ansteuerbaren LED, wobei jeder LED ein Mikropixel MIK zugeordnet ist. Mit dem Druckkopf gekoppelt ist eine mikroprozessorgesteuerte Steueranordnung (Figur 11), die im wesentlichen aus einer Druckeransteueranordnung DA und einer Lichtquellensteuereinrichtung DC besteht. Die Lichtquellensteuereinrichtung DC (Figur 1) ist im Druckkopf selbst integriert. Eine das Potentialrelief stabilisierende Regelanordnung PSR steht mit einem dem Fotoleiter F zugeordneten Potentialsensor PS üblicher Bauart in Verbindung. Die Einrichtung ER regelt die Einfärbung des Potentialreliefs UR. Die letztgenannte Regeleinrichtung ER wiederum steht mit der Entwicklerstation E und deren Elemente wie Tonerzuführeinrichtung, Tonerfüllstandsensor und einer die Biasspannung regelnden Anordnung BIAS (z.B. einem Spannungsregler) in Verbindung. Angesteuert wird die gesamte Anordnung über eine extern oder intern im Drucker angeordnete Datenverarbeitungsanordnung DVA. Die DVA liefert Informationen über die abzugebende Belichtung H für jeden Leuchtpunkt (Mikropixel) und die Strahlungsposition auf dem Fotoleiter in Form von Datensignalen, z.B. Datenwörter.

Sämtliche Steuer- und Regelanordnungen können hardwaremäßig als separate µP-gesteuerte Anordnungen ausgebildet sein oder sie können Bestandteil einer Gerätesteuerung sein, die ansonsten in üblicher Weise aufgebaut ist und die den elektrofotografischen Druckprozeß einschließlich Aufzeichnungsträgertransport und Fixierung steuert.

Die DVA liefert die für den Druck vorgesehenen Informationen in Form von Datensignalen über eine parallele 16-Bit-Schnittstelle an die Druckeransteueranordnung DA. Die Belichtung (Lichtenergie/Fläche) für jeden Leuchtpunkt (Mikropixel) wird dabei durch Zahlenwerte (Belichtungsbytes) beschrieben. Dabei bestimmt die Breite der Belichtungsbytes i die Anzahl der möglichen Helligkeitsstufen. Für z.B. 8 Belichtungsstufen (H0 bis H7) bestehen die Belichtungsbytes aus i = 3 Bit.

Die Belichtungsbytes werden in der Druckeransteueranordnung DA, die als spezielle Leiterplatte ausgebildet ist in i-Speicherbänken 10-1 bis 10-3 zwischengespeichert. Für jedes Bit der Belichtungsbytes existiert eine Speicherbank 10-1 bis 10-3. Zur Ansteuerung des Druckkopfes werden von einem in der Druckkopfansteueranordnung angeordneten Mikrocontroller 11 nacheinander 16-Bit-Worte aus den i-Speicherbänken 10-1 bis 10-3 an die Elektronik eines in der Lichtquellensteuereinrichtung DC angeordneten Druckkopfcontrollers 12 übergeben und dort in einem 16-Bit-Register eines Parallel-Serienwandlers 13 gepuffert. Der Parallel-Serienwandler 13 setzt die i-16-Bit-Worte in 64 Belichtungsbytes der Breite i um, die dann nacheinander an IC-B-Schaltkreise 14/1 bis 14/n übergeben werden.

Jeder IC-B-Schaltkreis 14/2 bis 14/n-1 ist mit seinem Nachbar IC-B-Schaltkreis 14/1 bis 14/n verbunden, wobei jedem IC-B jeweils eine Gruppe von LED's mit einer gleichen Anzahl von LED's zugeordnet ist. Diese einzelnen LED-Gruppen LED1 bis LED64 bzw. LED65 bis LED128 usw. enthalten jeweils 64 LED, die jeweils gemeinsam auf einem Chip integriert sind. Bei einer Druckerauflösung von 300 Dots/Inch zum Bedrucken von einem Format A4 quer sind dabei etwa n = 3500 LED's erforderlich. Durch die Verkoppelung der IC-B entsteht ein n x i großes Schieberegister, wobei n die Anzahl der anzusteuernden LED's darstellt und i die Anzahl der Speicherbänke 10.

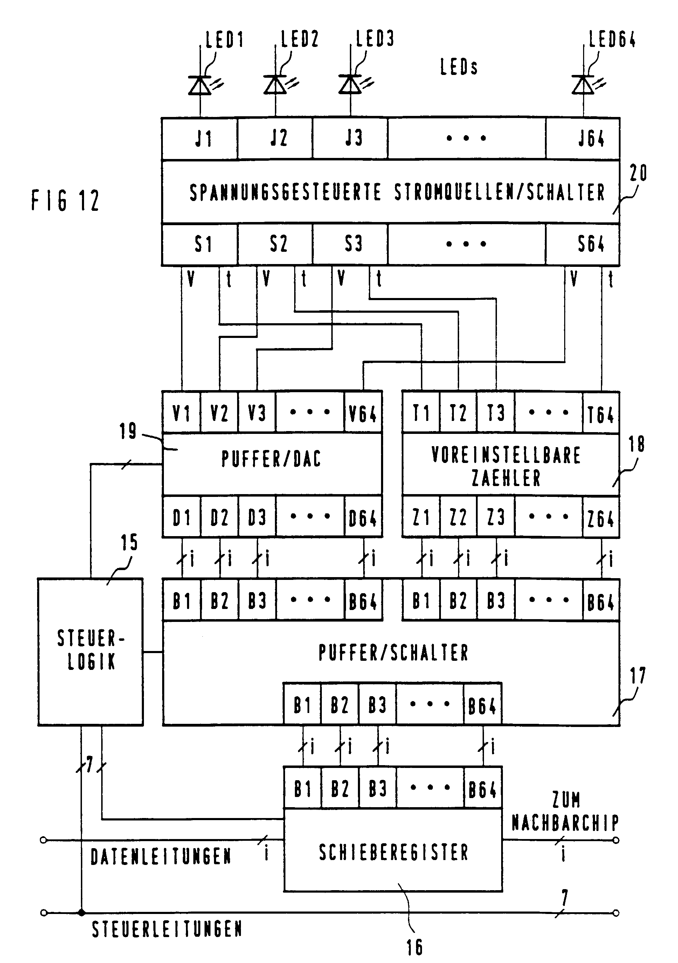

Der Aufbau der IC-B-Schaltkreise 14/1 bis 14/n ist aus der Figur 12 ersichtlich. Sie werden über eine mikroprozessorgesteuerte Steuerlogik 15 des Druckkopfcontrollers 12 angesteuert und enthalten jeweils ein Schieberegister 16 mit 64 Speicherplätzen entsprechend der Anzahl der LED's je LED-Gruppe. Weiterhin 64 Puffer mit Schalteinrichtungen 17; 64 voreinstellbare Zähler 18 und 64 Digital-Analogumsetzer mit zugehörigen Puffern 19. Zur Ansteuerung der 64 LED's sind spannungsgesteuerte Stromquellen mit zugehörigen Schalteinrichtungen 20 vorgesehen.

Die IC-B-Schaltkreise arbeiten in zwei Phasen, nämlich in einer Anlaufphase (Upload) und in einer Druckphase In der Anlaufphase erhält der Druckkopf LED-Abgleichinformationen, die eine nahezu gleiche Lichtabstrahlung aller LED ermöglichen, wobei die Toleranz der Lichtleistungsabstrahlung kleiner ± 3 % beträgt. Diese Abgleichsinformationen sind ebenfalls als Belichtungsbyts B1 bis B64 codiert. Sie können über eine Belichtungsenergiekorrektureinrichtung gewonnen werden, wie sie in der EP-B1-0 275 254 beschrieben ist. Um diesen Abgleich zu bewerkstelligen, werden vom Druckkopfcontroller 12 nacheinander die Abgleichbelichtungsbytes B1 - Bn für alle LED's in die Schieberegister 16 geschoben. Die Steuerlogik jedes IC-B-Schaltkreises 14/1 bis 14/n bewirkt danach in Verbindung mit den IC-B-Schaltern (Umschaltung Anlauf/Druckphase) die Übergabe der 64 Bytes B1 bis B64 an die Puffer 17, die die Abgleichwerte bis zum Ausschalten des Druckers oder bis zu einer erneuten Abarbeitung der Anlaufphase speichern. Die Puffer 17 steuern 64 Einzel-Digital-Analogumsetzer D1 - D64 des Umsetzers 19 an, die für jede LED ein spezielles Potential V1 bis V64 erzeugen, das den jeweiligen LED Strom und damit das Niveau der Belichtung bestimmt.

Auch zum Druck der Mikropixelzeilen werden zunächst die Belichtungsbytes B1 bis B64 für alle Bildpunkte in die IC-B-Schieberegister 16 geschoben. Danach werden sie gleichzeitig in allen IC-B-Schaltkreisen 14/1 bis 14/n an jeweils 64 voreinstellbare Einzel-Zähler Z1 - Z64 der Breite i eines Zählerblockes 18 übergeben, die den einzelnen LED's zugeordnet sind. Die Zähler 18 werden alle gemeinsam getaktet und heruntergezählt. Die Zeit zwischen zwei Takten wird durch einen Basiszeittakt bestimmt, der über die Steuerlogik 15 zugeführt wird. Damit wird in Abhängigkeit vom Zählerstand jedem der spannungsgesteuerten Stromquellen 20 über ihre Schalter S1 bis S64 eine Einschaltzeit T1 bis T64 zugeordnet. Beim Zählerstand ungleich Null fließt in der LED Strom. Beim Zählerstand Null wird er abgeschaltet. Der Zählvorgang bestimmt in der beschriebenen Weise die Emissionsdauer der LED1-LED64. Die Größen der einzelnen LED Ströme I1 bis I64 sind durch die in der Anlaufphase voreingestellten Potentiale V1 bis V64 des Analogumsetzers 19 festgelegt.

Die so erzeugte Belichtungsverteilung wird über eine hier nicht dargestellte Selfoc-Optik auf die Fotoleiteroberfläche F abgebildet.

Die Mikropixelbelichtungsverteilung wird durch den elektrofotografischen Prozeß in der folgenden Weise sichtbar gemacht:

Zunächst wird der Fotoleiter F gleichförmig aufgeladen, wobei das Aufladepotential mit Hilfe einer üblichen Potentialregeleinrichtung immer auf einen konstanten Potentialwert UA (Figur 3) gebracht wird.

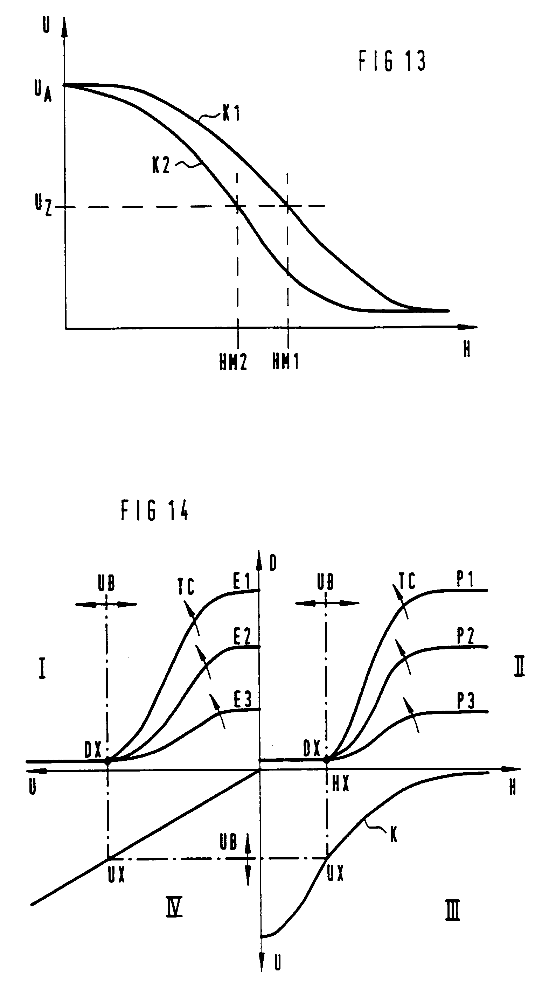

Danach erfolgt eine Belichtungspotentialregelung mit der Regelanordnung PSR. Hierbei wird mindestens eine festgelegte Belichtung evtl. auch in Form einer Rasterbelichtung auf den Fotoleiter F mit dem Aufladepotential UA aufgebracht und durch die Potentialsonde PS der integrale Potentialwert gemessen. Wird ein vorbestimmbarer Zielwert UZ (Figur 13) nicht erreicht, dann wird ein Grundparameter des LED Druckkopfes, z.B. der Ansteuerstrom I oder die Schaltzeit T oder beide so verändert, daß die mittlere Lichtemission erhöht wird, falls der gemessene Potentialwert größer als UZ ist. Falls der gemessene Potentialwert kleiner als UZ ist, wird die mittlere Lichtemission vermindert. Durch die Belichtungspotentialregelung erfolgt also eine Belichtungsniveauanpassung an die Fotoleiterkennlinie des verwendeten Fotoleiters. Diese Anpassung der mittleren Belichtung HM an die aktuelle Fotoleiterkennlinie ist aus der Figur 13 ersichtlich. Die Figur 13 zeigt dabei den Verlauf von zwei Fotoleiterkennlinien für unterschiedliche Temperaturen, wobei die Fotoleiterkennlinie K2 einer Temperatur zugeordnet ist, die größer ist, als die Temperatur der Fotoleiterkennlinie K1. Um den Belichtungszielwert UZ zu erreichen, müssen für die Kennlinie K1 die Belichtung HM1 und für die Kennlinie K2 die Belichtung HM2 eingestellt werden.

Für die Belichtungsregelung können als zu variierende Grundparameter des LED-Druckkopfes vorteilhafter Weise der Zeitbasiswert (Basiszeittakt) oder Druckkopf-LED-Basisstrom I verwendet werden. Mit der Zeitbasisregelung wird die Einschaltzeit der LED's proportional verändert. Der Basisstrom bestimmt den Grundwert der LED-Lichtleistung bzw. das Belichtungsniveau. Beide Formen der Regelung der Belichtung haben den Vorteil, daß damit sowohl der Verschiebung der mittleren Empfindlichkeit des Fotoleiters F als auch der Veränderung der Steilheit der Fotoleiterkennlinie K1, K2 Rechnung getragen wird.

Mit dem vorstehend beschriebenen Schritt wird der Basiswert der Belichtung an die aktuelle Kennlinienform des Fotoleiters so angeglichen, daß mit bestimmten Belichtungszeitwerten immer die gleichen Potentialwerte erzeugt werden. Damit können z.B. der Temperatur und der Zykleneinfluß auf die Fotoleiterkennlinie sowie die Fotoleiterchargen-Schwankungen druckbildseitig kompensiert werden.

Nachdem der Basiswert der Belichtung so eingestellt ist, daß in den vorgegebenen Toleranzen bei einer bestimmten Belichtungszeit der gleiche Potentialwert - bei Rastern das gleiche Potentialrelief ensteht - folgt der Schritt der Einfärbungsregelung mit Hilfe der Regelanordnung ER.

Die Einfärbungsregelung wird anhand der Figur 14 näher erläutert. Bei der Darstellung der Figur 14 handelt es sich um eine in der Elektrofotografie übliche grafische Vierquadrantendarstellung der elektrofotografischen Prozesse. Der Quadrant I zeigt den Verlauf der Entwicklungskennlinien E1, E2 und E3 und damit die Abhängigkeit der optischen Dichte D von dem Fotoleiterpotential U für verschiedene Einfärbungsgrade $\phi$, nämlich für $\phi = 100\ \%$ entsprechend der Kennlinie E1, $\phi = 70\ \%$ entsprechend der Kennlinie E2 und $\phi = 50\ \%$ entsprechend der Kennlinie E3. Der Quadrant II wiederum zeigt den Verlauf der Prozeßkennlinien P1 bis P3 und damit die Abhängigkeit der optischen Dichte D von der Belichtung H bei den ensprechenden Einfärbungsgraden von 100 %, 70 % und 50 %. Im Quadranten III ist die dem verwendeten Fotoleiter zugeordnete Fotoleiterkennlinie K dargestellt, entsprechend der Kennlinie der Figur 13 und damit die Abhängigkeit des Belichtungspotentials U in Abhängigkeit von der Belichtung H. Der Quadrant IV enthält eine Spiegelgerade mit Maßstabsveränderung zur grafischen Übertragung des auf der Fotoleiterentladungskennlinie K ablesbaren Potentialwertes U auf die Entwicklungskennlinien El bis E3. Die strichpunktierten Linien erläutern die Zuordnungsmöglichkeiten innerhalb der Kennlinien. So entspricht einer Belichtung HX ein Entladepotential UX mit einer zugehörigen optischen Dichte DX auf den Entwicklungskennlinien E bzw. einer entsprechenden optischen Dichte DX auf der Prozeßkennlinie P. TC bezeichnet die Veränderungen der Entwicklungskennlinien E und der Prozeßkennlinien P in Abhängigkeit von der Tonerkonzentration. UB bezeichnet das Biaspotential.

Zur Einfärbungsregelung werden eine Rasterfläche und gegebenenfalls zusätzlich eine Volltonfläche auf den Fotoleiter F aufbelichtet und durch Tonerablagerungen entwickelt. Die entwickelt optischen Ist-Dichten D werden über einen optischen Dichtesensor DS (Figur 1) gemessen und mit vorgebbaren Belichtungszielwerten (optischen Dichten, Solldichten) für die Rasterfläche und gegebenenfalls für die Vollfläche verglichen. Je nach Größe der Abweichung von den Belichtungszielwerten (Sollwerten) werden eine oder mehrere Grundgrößen des Entwicklungsprozesses varriert. Wie aus der Figur 14 ersichtlich, kann durch Erhöhung der Tonerkonzentration TC die Steilheit (Gradation) der Entwicklungskennlinien E und der Prozeßkennlinien P erhöht werden. Durch Änderung des Biaspotentials UB können die Entwicklungskennlinien E oder die Prozeßkennlinien P entlang der Abszisse parallel verschoben werden (Verschiebung der Punkte DX). Je nach Korrekturbedarf kann durch Änderung der Tonerkonzentration TC und/oder durch Änderung des Biaspotentiales UB die Zielkennlinienkombination (Rasterkennlinie und gegebenenfalls Volltonkennlinie) eingestellt werden.

Die Belichtungspotentialregelung und die Einfärbungsregelung können so miteinander kombiniert werden, daß die gleichen Belichtungs- und Meßflächen für beide Regelungen verwendet werden. Da zunächst die Belichtungspotentialwerte gemessen werden, kann für den Fall, daß sie im Zielbereich liegen, im gleichen Zyklus mit der gleichen Einfärbungsregelung begonnen werden. Nach Erreichen der Einfärbezielwerte ist es möglich, den Druckprozeß zu starten. Die Einhaltung der Zielwerte für das Aufladepotential UA, das Belichtungspotential (Belichtungszielwert UZ), die optische Dichte für Rasterfläche und Volltonfläche DR wird während des Druckens zyklisch überwacht und erforderlichenfalls nachgeregelt. Der Überwachungs- und Regelungsvorgang kann gesteuert von der Gerätesteuerung automatisch ablaufen.

Wie bereits eingangs im Zusammenhang mit den Figuren 6 und 7 erläutert, werden durch die zeichenabhängige Ansteuerung der LED's Mikropixel-Belichtungskegel UM mit unterschiedlichen Mikropixel-Belichtungsverteilungen erzeugt, die im Makropixel eine resultierende Potentialmulde UR bzw. Potentialrelief bewirken. Der Toner lagert sich nur auf den Flächenbereichen des Makropixels ab, deren Belichtungspotential kleiner als die Biasspannung UB ist. Damit gibt die Schnittlinie AD des Biasniveaus UB mit der Potentialmulde UR bzw. dem Potentialrelief die Einfärbungsgrenze EG an. Diese kann wie aus dem Vergleich der Darstellungen der Figuren 6 und 7 hervorgeht, bei konstant gehaltener Belichtung des mittleren Mikropixels durch stufenweise Veränderung der Belichtung in den benachbarten Mikropixeln in feinen Stufen verändert werden. Diese Abstufung ist um so "weicher" je stärker die Lichtenergieverteilung benachbarter Mikropixel einander geometrisch überlappen und je mehr Belichtungsstufen je Mikropixel definiert eingestellt werden können.

Bei dem beschriebenen Ausführungsbeispiel wird der Fotoleiter F vor dem Belichtungsprozeß mit Hilfe der Ladeeinrichtung L aufgeladen und über die Belichtungseinrichtung DK entladen. Das gleiche Prinzip ist jedoch auch anwendbar auf elektrofotografische Prozesse, bei denen der entladene Fotoleiter mit Hilfe der Belichtungseinrichtung DK zeichenabhängig aufgeladen wird. Für die Belichtungseinrichtung DK kann sowohl ein intensitätsgesteuerter Laserstrahl als auch der beschriebene LED-Kamm verwendet werden. Auch die Verwendung von anderen intensitätsabhängig steuerbaren Lichtquellen, wie Laserdioden usw. ist möglich.

Es hat sich herausgestellt, daß bei der Einfärbung der Makroladungsbereiche die Tonerablagerung von der exakten elektrostatischen Einfärbungsgrenze abweicht. Diese Abweichungen werden durch den Tonertransferprozeß auf den endgültigen Bildträger, der meist aus Papier besteht und durch die Fixierung des Tonerbildes verstärkt. Dies macht gegebenenfalls einen empirischen Abgleich der Belichtungswerte und der Einfärbungskennlinien erforderlich um eine vorgegebene Ziel-Kennlinien-Kombination (Dichtekurven für Volltonflächen, Rasterflächen und Linien) zu erreichen.

Bezugszeichenliste

| | |
|---|---|
| F | Fotoleitertrommel |
| DK | Belichtungseinrichtung, LED-Leiste, Druckkopf |
| E | Entwicklerstation |
| UDS | Umdruckstation |
| AT | Aufzeichnungsträger, Endlospapier |
| R | Reinigungsstation |
| L | Ladeeinrichtung |
| MAK, MAK1 bis MAK4 | Makropixel |
| MIK | Mikropixel |
| H0 bis H7,H,HX | Belichtung, Lichtenergie/Fläche, Belichtungsstufen |
| U0 bis U7,U,UX | Potentialniveau Fotoleiter, Entladepotential |
| UA | Aufladepotential Fotoleiter |
| UB | Biasspannungsniveau, Biasspannung |
| UM | Mikropixel-Belichtungskegel, Mikroladungsbereich |
| X | Wegstrecke |
| EG | Einfärbungsgrenze |
| AD | Begrenzungslinie der eingefärbten Fläche, Schnittebene, Schnittlinie |
| UR | resultierende Potentialmulde, Potentialrelief,Makroladungsbereich |
| RP | Rasterpunktform, Einfärbungsfläche, Rasterfläche |
| LED1 bis LEDn | Leuchtdioden |
| DA | Druckeransteueranordnung |
| DC | Lichtquellensteueranordnung |
| PSR | Potentialrelief bzw. Aufladepotential stabilisierende Regelanordnung Belichtungspotentialre- |

| | |
|---|---|
| | gelung |
| PS | Potentialsensor |
| DS | Dichtesensor optisch |
| ER | Einfärbung des Potentialreliefs regelnde Einrichtung |
| BIAS | Biasspannung regelnde Einrichtung, Spannungsregler |
| DVA | Datenverarbeitungsanlage, rechnergesteuerte Anordnung |
| 10/1 bis 10/3 | Speicherbänke, Speicher |
| 11 | Mikrocontroller |
| 12 | Druckkopfcontroller |
| 13 | Parallelserienwandler mit Register |
| 14/1 bis 14/n | IC-B Schaltkreise |
| 15 | mikroprozessorgesteuerte Steuerlogik |
| 16 | Schieberegister, Speicher |
| 17 | Puffer mit Schalter |
| 18 | voreinstellbarer Zähler, Zählerblock |
| 19 | Digital-Analogumsetzer, spannungserzeugende Einrichtung |
| D1 - D64 | Einzelumsetzer des Digital-Analogumsetzers 19 |
| 20 | Spannungsgesteuerte Stromquellen mit Schaltern |
| B1 - B64 | Belichtungsbytes |
| V1 - V64 | Ansteuerpotential, Potential |
| S1 - S64 | Schalter der spannungsgesteuerten Stromquellen |
| Z1 - Z64 | Einzel zähler im Zählerblock 18 |
| T1 - T64 | Ablaufzeiten der Zähler 18, Einschaltzeit |
| I1 - I64 | Erregerströme LED |
| K1, K2 | Fotoleiterkennlinie |
| HM1 - HM2 | mittlere Belichtung, Kennlinie K1, K2 |
| UZ | Sollpotential |
| E1 - E3 | Entwicklungskennlinien |
| D, DX | optische Dichte |
| P1 - P3, P | Prozeßkennlinien |
| TC | Tonerkonzentration |

**Patentansprüche**

1. Elektrofotografisches Verfahren zur Erzeugung von einem über Tonerantragsmittel (E) einfärbbaren, durch eine Einfärbungsgrenze einstellbaren Verlaufs begrenzten Makroladungsbereich auf einem Fotoleiter (F) eines Druck- oder Kopiergerätes unter Verwendung von mindestens einer belichtungs- und und positionsvariablen steuerbaren Lichtquelle (LED) mit folgenden Merkmalen:

   a) Zur Bildung des durch die Einfärbungsgrenze (EG) begrenzten Makroladungsbereichs wird durch Steuerung der Belichtung (H) der Lichtquelle (LED) und der Strahlungsposition auf dem Fotoleiter (F) und durch Steuerung einer zwischen Fotoleiter (F) und Tonerantragsmittel (E) anlegbaren Biasspannung (UB) auf dem Fotoleiter (F) ein elektrostatisches Potentialrelief (UR) aus einzelnen benachbarten Mikroladungsbereichen (UM) belichtungsabhängiger Größe erzeugt und die Einfärbungsgrenze (EG) festgelegt, deren Verlauf bestimmt ist durch das Biasspannungsniveau (UB) auf dem Potentialrelief (UR).
   b) Das von der Lichtquelle (LED) je Mikroladungsbereich (UM) auf den Fotoleiter (UF) abgegebene Licht weist eine Belichtungsverteilung (H über X) auf, die derart bemessen ist, daß ausgehend von einem Zentrum (A) hoher Belichtung, die Belichtung (H) nach außen hin homogen abfällt.

2. Elektrofotografisches Verfahren nach Anspruch 1, wobei zur Darstellung einer Fläche eines Halbtonbildes ein Raster aus Makropixeln (MAK) mit Graustufen zugeordneten Einfärbungsflächen (RP) verwendet wird, deren Größe im Integrationsbereich des menschlichen Auges liegt und jedes Makroprixel (MAK) wiederum aus einem Raster aus Mikropixeln (MIK) aufgebaut ist und daß auf dem Fotoleiter (F) für jeden Makropixel (MAK) ein durch die Einfärbungsgrenze (EG) begrenzter Makroladungsbereich (UR) mit dieser Einfärbungsfläche (RP) erzeugt wird, der aus benachbarten, den Mikropixeln (MIK) zugeordneten Mikroladungsbereichen (UM) zusammengesetzt ist.

3. Elektrofotografisches Verfahren nach einem der Ansprüche 1 oder 2, wobei die zur Bildung von einem Makroladungsbereich (UR) herangezogenen Mikroladungsbereiche (UM) auf dem Fotoleiter (F) durch Lichtquellen (LED) erzeugt werden, deren Belichtungsverteilungskurven sich auf dem Fotoleiter überlappen.

4. Elektrofotografisches Verfahren nach Anspruch 3, wobei die Lichtquellen (LED) eine kegel- und/ oder glockenförmige Belichtungsverteilungskurve aufweisen.

5. Elektrofotografisches Verfahren nach einem der Ansprüche 3 oder 4 mit einer Dimensionierung der Überlappung der Belichtungskurven der Lichtquellen (LED) für die gilt:

   a) Minimale Überlappung:

   $f_u$ größer 1

   b) Maximale Überlappung:

   $f_u$ = 4 bis 10

   wobei der Überlappungsfaktor $f_u$ definiert ist, als das Verhältnis des Leuchtfleckdurchmessers d bei 12,5 % der maximalen Leuchtfleckenergiedichte zum Rastermaß $d_r$

$$f_u = \frac{d}{d_r}$$

   mit einem Rastermaß $d_r$ entsprechend dem Abstand der Zentren zwei benachbarter Leuchtflecke, die den Lichtquellen (LED) zugeordnet sind.

6. Elektrofotografisches Verfahren nach einem der Ansprüche 1 bis 5, mit folgenden das Potentialrelief (UR) stabilisierenden Verfahrensschritten:

   a) Einstellen des Fotoleiters (F) auf einen vorgegebenen Potantialwert (UA).
   b) Belichten des Fotoleiters (F) mit einem vorgebbaren Normbelichtungsmuster
   c) Erfassen eines durch das Normbelichtungsmuster hervorgerufenen Ist-Ladungspotentials (U)
   d) Vergleich des Ist-Ladungspotentiais mit einem Soll-Ladungspotential (UZ)
   e) Einstellung des Belichtungsniveaus, der das Normbelichtungsmuster hervorrufenden Lichtquellen (LED) in Abhängigkeit von dem Soll-Istwertvergleich derart, daß bei der Belichtung mit dem vorgegebenen Normbelichtungsmuster sich auf dem Fotoleiter (F) das Soll-Ladungspotential (UZ) einstellt.

7. Elektrofotografisches Verfahren nach einem der Ansprüche 1 bis 6 mit folgenden die Einfärbung des Potentialreliefs (UR) regelnden Verfahrensschritten:

   a) Erzeugen einer Tonermarke auf dem Fotoleiter (F) unter Verwendung eines Normbelichtungsmusters und Erfassen dessen optischer Ist-Dichte;
   b) Vergleich der optischen Ist-Dichte mit einer Soll-Dichte;
   c) Einstellen von Parametern des Entwicklerprozesses wie Tonerkonzentration (TC) und Biaspotential (UB) in Abhängigkeit von dem Soll-Istvergleich und Regelung der Parameter (TC, UB) derart, daß sich die optische Soll-Dichte einstellt.

8. Verfahren nach einem der Ansprüche 6 oder 7, wobei für die Stabilisierung des Potentialreliefs (UR) und die Einfärbungsregelung die gleichen Belichtungs- und Meßflächen verwendet werden.

9. Anordnung zum Erzeugen von einem über Tonerantragsmittel (E) einfärbbaren, durch eine Einfärbungsgrenze (EG) einstellbaren Verlaufs begrenzten Makroladungsbereich auf einem Fotoleiter (F) eines Druck- oder Kopiergerätes, wobei der Makroladungsbereich aus benachbarten Mikroladungsbereichen aufgebaut ist mit

   - mindestens einer hinsichtlich ihrer Belichtung (H) und ihrer Strahlungsposition auf dem Fotoleiter (F) steuerbaren Lichtquelle (LED) mit einer Belichtungsverteilung die derart bemessen ist, daß sie ausgehend von einem Zentrum (A) hoher Belichtung nach außen hin homogen abfällt;
   - einer Einrichtung um in Abhängigkeit von die Größe und den Ort des Makroladungsbereichs auf dem Fotoleiter kennzeichnenden Datensignalen auf dem Fotoleiter, durch Erzeugung benachbarter Mikroladungsbereiche variabler Größe, ein elektrostatisches Potentialrelief (UR) auszubilden und die Einfärbungsgrenze (EG) festzulegen, deren Verlauf bestimmt ist durch ein Biasspannungsniveau (UB) auf dem Potentialrelief (UR), wobei die Einrichtung aufweist:

- mit den Lichtquellen (LED) gekoppelte Lichtquellen-Steuermittel (DC, DA) zur Steuerung der Belichtung;
- Biasspannungssteuermittel (BIAS) um zwischen den Tonerantragsmitteln (E) und dem Fotoleiter (F) eine Biasspannung (UB) einstellbarer Größe anzulegen und
- Mittel (DA, DC, DVA) zur Festlegung der Einfärbungsgrenze (EG) durch datensignalabhängige Ansteuerung der Lichtquellensteuermittel (DC, DA) und/oder der Biasspannungssteuermittel (BIAS).

10. Anordnung nach Anspruch 9, wobei als Lichtquelle (DK) ein optischer Kamm mit einer Vielzahl einzeln ansteuerbarer Lichtquellen (LED) angeordnet ist.

11. Anordnung nach Anspruch 9, wobei als Lichtquelle (DK) ein über eine Ablenkeinrichtung positionierbarer Laserstrahl vorgesehen ist.

12. Anordnung nach einem der Ansprüche 9 bis 11, mit einer das Potentialrelief stabilisierenden Regelanordnung, wobei die Regelanordnung aufweist:

- einen Potentialsensor (PS) um die Höhe eines vorgebbaren Fotoleiter-Aufladepotentials (UA) und ein durch Belichten des auf den vorgebbaren Potentialwert (UA) eingestellten Fotoleiters (F) mit einem Normbelichtungsmuster auf dem Fotoleiter erzeugtes Ist-Ladungspotential (U) zu erfassen;
- eine mit dem Potentialsensor (PS) und den Lichtquellensteuermitteln (DA, DC) gekoppelte Regeleinrichtung (PSR), die in Abhängigkeit von einem Soll-Ist-Vergleich der Ladungspotentiale das vorgegebene Fotoleiter-Aufladepotential (UA) einstellt und/oder das Belichtungsniveau der Lichtquellen (LED) derart regelt, daß bei der Belichtung mit dem Normbelichtungsmuster sich auf dem Fotoleiter (F) ein Soll-Ladungspotential (UZ) einstellt.

13. Anordnung nach einem der Ansprüche 9 bis 12, mit einer die Einfärbung des Potentialreliefs (UR) regelnden Einrichtung, wobei die Einrichtung aufweist:

- Mittel (DS) zum Erfassen der optischen Dichte (D)einer auf dem Fotoleiter (F) unter Verwendung eines Normbelichtungsmusters erzeugten Tonermarke;
- eine mit den Erfassungsmitteln (DS) und den den Entwicklungsprozeß beeinflußenden Aggregaten einer Entwicklerstation (E) gekoppelten Einfärberegeleinrichtung (ER), die in Abhängigkeit von einem Soll-Ist-Vergleich der optischen Dichte (D) der Tonermarke, Parameter des Entwicklerprozesses wie Tonerkonzentration (TC) und Biasspannung (UB) derart regelt, daß sich die optische Solldichte einstellt.

14. Anordnung nach einem der Ansprüche 9 bis 13, mit

- den Lichtquellen (LED) zugeordneten, die Lichtquellen betätigenden Schaltelementen (20);
- einer mit den Schaltelementen (20) koppelbaren taktgesteuerten Zähleinrichtung (18);
- einem mit der Zähleinrichtung (18) koppelbaren Speicher (16) zur Aufnahme von die Belichtung (H) jeder Lichtquelle (LED) kennzeichnenden Datenwörtern und
- einer Steuereinrichtung (15), die zur Ansteuerung der Lichtquellen (LED) Zählerstände der Zähleinrichtung (18) entsprechend den im Speicher (16) gespeicherten Datenwörtern voreinstellt und dann durch Takten der Zähleinrichtung (18) die Lichtquellen (LED) über die Schaltelemente (20) entsprechend den Zählerständen aktiviert.

15. Anordnung nach einem der Ansprüche 9 bis 14 mit den Lichtquellen (LED) zugeordneten spannungsgesteuerten Stromquellen (20), die in Abhängigkeit von einem durch die Stromquellen (20) hervorgerufenen Erregerstrom (I) das Belichtungsniveau der Lichtquellen (LED) einstellen.

16. Anordnung nach Anspruch 14 und 15 mit

- einer mit dem Speicher (16) koppelbaren weiteren Speichereinrichtung (17) zur Aufnahme von Lichtquellenabgleichinformationen zugeordneten Datenwörtern und
- einer mit den spannungsgesteuerten Stromquellen (20) und der weiteren Speichereinrichtung (17) koppelbaren spannungserzeugenden Einrichtung (19), die in Abhängigkeit von den Datenwörtern Ansteuerspannungen (V) für die Stromquellen (20) generiert.

## Claims

1. An electrophotographic process for generating a macro-charge zone inkable by toner applicators (E) and delimited by an inking limit having an adjustable contour on a photoconductor (F) of a printing or copying machine, using at least one exposure-variable and position-variable controllable light source (LED), having the following features:

   a) For forming the macro-charge zone delimited by the inking limit (EG), by controlling the exposure (H) of the light source (LED) and the radiation position on the photoconductor (F) and by controlling a bias voltage (UB) which can be applied between photoconductor (F) and toner applicator (E), an electrostatic potential relief (UR) made of individual adjacent micro-charge zones (UM) of exposure-dependent size is generated on the photoconductor (F), and the inking limit (EG) is defined, the contour of which is determined by the bias voltage level (UB) on the potential relief (UR),
   b) The light emitted by the light source (LED) per micro-charge zone (UM) onto the photoconductor (UF) has an exposure distribution (H over X) which is dimensioned in such a manner that, proceeding from a center (A) of high exposure, the exposure (H) falls off homogeneously to the outside.

2. The electrophotographic process as claimed in claim 1, wherein, to represent an area of a half-tone image, a matrix of macro-pixels (MAK) having inking areas (RP) assigned to gray steps is used, the magnitude of which areas lies in the integration range of the human eye and each macro-pixel (MAK) is in turn constructed from a matrix of micro-pixels (MIK) and wherein a macro-charge zone (UR), which is delimited by the inking limit (EG), is generated on the photoconductor (F) for each macro-pixel (MAK), using this inking area (RP), said macro-charge zone being composed of adjacent micro-charge zones (UM) assigned to the micro-pixels (MIK).

3. The electrophotographic process as claimed in claim 1 or 2, wherein the micro-charge zones (UM) used for the formation of a macro-charge zone (UR) are generated on the photoconductor (F) by means of light sources (LED) whose exposure distribution curves overlap on the photoconductor.

4. The electrophotographic process as claimed in claim 3, wherein the light sources (LED) have a cone-shaped and/or bell-shaped exposure distribution curve.

5. The electrophotographic process as claimed in claim 3 or 4, having a dimensioning of the overlapping of the exposure curves of the light sources (LED) for which it is true that:

   a) Minimum overlapping:
      $f_u$ greater than 1
   b) Maximum overlapping:
      $f_u = 4$ to $10$
      where the overlap factor $f_u$ is defined as the ratio of the diameter d of the spot of light at 12.5 % of the maximum energy density of the spot of light to the matrix dimension $d_r$

$$f_u = \frac{d}{d_r}$$

   with a matrix dimension $d_r$ corresponding to the separation of the centers of two neighboring spots of light which are associated with the light sources (LED).

6. The electrophotographic process as claimed in one of claims 1 to 5, having the following process steps stabilizing the potential relief (UR):

   a) Adjustment of the photoconductor (F) to a predetermined potential value (UA).
   b) Exposure of the photoconductor (F) with a predeterminable standard exposure pattern
   c) detection of an actual charge potential (U) caused by the standard exposure pattern
   d) comparison of the actual charge potential with a desired charge potential (UZ)
   e) adjustment of the exposure level of the light sources (LED) causing the standard exposure pattern as a function of the comparison of desired and actual values in such a manner that, given exposure with the predetermined standard exposure pattern, the desired charge potential (UZ) occurs on the photoconductor (F).

7. The electrophotographic process as claimed in one of claims 1 to 6, having the following process steps controlling the inking of the potential relief (UR):

   a) Generation of a toner mark on the photoconductor (F), using a standard exposure pattern and detection of its actual optical density;
   b) Comparison of the actual optical density with a desired density;
   c) Adjustment of parameters of the developer process such as toner concentration (TC) and bias potential (UB) as a function of the comparison of desired and actual values and control of the parameters (TC, UB) in such a manner that the desired optical density occurs.

8. The process as claimed in claim 6 or 7, wherein the same exposure and measuring areas are used for the stabilization of the potential relief (UR) and the inking control.

9. An arrangement for generating a macro-charge zone inkable by toner applicators (E) and delimited by an inking limit (EG) having an adjustable contour on a photoconductor (F) of a printing or copying machine, the macro-charge zone being constructed from neighboring micro-charge zones, having

   - at least one light source (LED), which can be controlled in terms of its exposure (F) and its radiation position on the photoconductor (F) and has an exposure distribution which is dimensioned in such a manner that, proceeding from a center (A) of high exposure, it falls off homogeneously to the outside;
   - equipment in order, as a function of data signals characterizing the magnitude and the location of the macro-charge zone on the photoconductor, to construct an electrostatic potential relief (UR) on the photoconductor by generating adjacent micro-charge zones of variable size, and to define the inking limit (EG), the contour of which is determined by a bias voltage level (UB) on the potential relief (UR), wherein the equipment has:
   - light source control means (DC, DA), coupled to the light sources (LED), for controlling the exposure;
   - bias voltage control means (BIAS) in order to apply a bias voltage (UB) of adjustable magnitude between the toner applicators (E) and the photoconductor (F) and
   - means (DA, DC, DVA) for defining the inking limit (EG) by means of data signal-dependent driving of the light source control means (DC, DA) and/or the bias voltage control means (BIAS).

10. The arrangement as Claimed in claim 9, wherein an optical comb with a multiplicity of individually drivable light sources (LED) is arranged as light source (DK).

11. The arrangement as claimed in claim 9, wherein a laser beam which can be positioned via deflection equipment is provided as light source (DK).

12. The arrangement as claimed in one of claims 9 to 11, having a control arrangement stabilizing the potential relief, wherein the control arrangement has:

   - a potential sensor (PS) to detect the level of a predeterminable photoconductor charge potential (UA) and an actual charge potential (U) generated on the photoconductor by means of exposing the photoconductor (F) adjusted to the predeterminable potential value (UA), using a standard exposure pattern;
   - control equipment (PSR), coupled to the potential sensor (PS) and the light source control means (DA, DC), which sets the predetermined photoconductor charge potential (UA) as a function of a comparison of desired and actual values of the charge potentials and/or controls the exposure level of the light sources (LED) in such a manner that a desired charge potential (UZ) occurs on the photoconductor (F) during exposure with the standard exposure pattern.

13. The arrangement as claimed in one of claims 9 to 12, having equipment controlling the inking of the potential relief (UR), wherein the equipment has:

   - means (DS) for detecting the optical density (D) of a toner mark generated on the photoconductor (F) using a standard exposure pattern;
   - an inking control equipment (ER), which is coupled to the detection means (DS) and the units of a developer station (E) which influence the development process and which, as a function of a comparison of desired and actual values of the optical density (D) of the toner mark, controls parameters of the development process such as toner concentration (TC) and bias voltage (UB) in such a manner that the desired optical density occurs.

14. The arrangement as claimed in one of claims 9 to 13, having

- switching elements (20) assigned to the light sources (LED) and actuating the light sources;
- a clock-controlled counting equipment (18) which can be coupled to the switching elements (20);
- a memory (16), which can be coupled to the counting equipment (18), for receiving data words characterizing the exposure (H) of each light source (LED) and
- a control equipment (15) which, for driving the light sources (LED), presets counter states of the counting equipment (18) in accordance with the data words stored in the memory (16) and then, by clocking the counting equipment (18), activates the light sources (LED) via the switching elements (20) in accordance with the counter states.

15. The arrangement as claimed in one of claims 9 to 14, having voltage-controlled current sources (20) which are assigned to the light sources (LED) and which set the exposure level of the light sources (LED) as a function of an excitation current (I) caused by the current sources (20).

16. The arrangement as claimed in claims 14 and 15, having

- a further memory equipment (17), which can be coupled to the memory (16), for receiving data words assigned to light source equalizing information and
- a voltage-generating equipment (19) which can be coupled to the voltage-controlled current sources (20) and the further memory equipment (17) and which generates drive voltages (V) for the current sources (20) as a function of the data words.

**Revendications**

1. Procédé electrophotographique pour produire une macrorégion de charge pouvant être encrée à l'aide de moyens (E) de dépôt de toner, limitée par une limite d'encrage, de tracé réglable, sur un photoconducteur (F) appartenant à un appareil d'impression ou de reproduction, avec utilisation d'au moins une source de lumière commandée (LED), variable en éclairement et en position, qui possède les caractéristiques suivantes :

   a) pour former la macrorégion de charge limitée par la limite d'encrage (EG), on produit, par la commande de l'éclairement (H) de la source lumineuse (LED) et de la position de rayonnement sur le photoconducteur (F), et par la commande d'une tension de polarisation (UB) qui peut être appliquée entre le photoconducteur (F) et le moyen de dépôt de toner (E), on établit sur le photoconducteur (F) un relief de potentiel électrostatique (UR) composé de microrégions de charge (UM) individuelles adjacentes, d'une dimension qui est fonction de l'éclairement, et on fixe la limite d'encrage (EG), dont le tracé est déterminé par le niveau de tension de polarisation (UB) sur le relief de potentiel (UR) ;
   b) la lumière projetée par la source lumineuse (LED) sur le photoconducteur (UF) dans chaque microrégion de charge (UM) présente une répartition d'éclairement (H sur X) qui est calculée de manière qu'en partant d'un centre (A) de plus grand éclairement, l'éclairement (H) décroîsse vers l'extérieur de façon homogène.

2. Procédé electrophotographique selon la revendication 1, dans lequel, pour représenter une surface d'une image en demi-teinte, on utilise une trame composée de macropixels (MAK) ayant des surfaces d'encrage (RP) associées à des niveaux de gris, et dont la dimension se trouve dans le domaine d'intégration de l'oeil humain, et chaque macropixel (MAK) est à son tour composé d'une trame de micropixels (MIK), et en ce qu'on produit sur le photoconducteur (F), pour chaque macropixel (MAK), une macrorégion de charge (UR) limitée par la limite d'encrage (EG) et possédant cette surface d'encrage (RP), région qui est composée de microrégions de charge (UM) voisines, qui sont associées aux micropixels (MIK).

3. Procédé electrophotographique selon une des revendications 1 et 2, dans lequel les microrégions de charge (UM) utilisées pour former une macrorégion de charge (UR) sont produites sur le photoconducteur (F) par des sources lumineuses (LED) dont les courbes de distribution de l'éclairement se chevauchent sur le photoconducteur.

4. Procédé electrophotographique selon la revendication 3, dans lequel les sources lumineuses (LED) présentent une courbe de distribution de l'éclairement en forme de cône et/ou de cloche.

5. Procédé electrophotographique selon une des revendications 3 et 4, comportant un dimensionnement du chevauchement des courbes d'éclairement des sources lumineuses (LED) pour lequel les expressions suivantes sont valables :

a) chevauchement minimal : $f_u$ plus grand que 1

b) chevauchement maximal : $f_u = 4$ à 10

où le facteur de chevauchement $f_u$ est défini par le rapport entre le diamètre $\underline{d}$ de la tache de lumière, à 12,5 % de la densité maximale d'énergie de la tache de lumière, et la dimension $d_r$ de la trame

$$f_u = \frac{d}{d_r}$$

avec une dimension de trame $d_r$ qui correspond à la distance entre les centres de deux taches de lumière adjacentes qui correspondent aux sources lumineuses (LED).

**6.** Procédé électrophotographique selon une des revendications 1 à 5, comportant les phases de procédé suivantes qui stabilisent le relief de potentiel (UR) :

a) réglage du photoconducteur (F) sur une valeur de potentiel (UA) prédéterminée ;

b) éclairement du photoconducteur (F) avec un motif d'éclairement normal prédéterminé ;

c) détection d'un potentiel de charge réel (U) déterminé par le motif d'éclairement normal ;

d) comparaison du potentiel de charge réel avec un potentiel de charge de consigne (UZ) ;

e) réglage du niveau d'éclairement des sources lumineuses (LED) qui engrendent le motif d'éclairement normal en fonction de la comparaison entre valeur de consigne et valeur réelle, de telle manière que, dans le cas d'un éclairement avec un motif d'éclairement normal prédéterminé, le potentiel de charge de consigne (UZ) s'établisse sur le photoconducteur (F) .

**7.** Procédé électrophotographique selon une des revendications 1 à 6, comprenant les phases de traitement suivantes, qui règlent l'encrage du relief de potentiel (UR) :

a) production d'une marque de toner sur le photoconducteur (F) avec utilisation d'un motif d'éclairement normal, et détection de sa densité optique réelle ;

b) comparaison de la densité optique réelle avec une densité de consigne ;

c) réglage de paramètres du processus de développement, tels que la concentration du toner (TC) et le potentiel de polarisation (UV), en fonction de la comparaison entre valeur de consigne et valeur réelle, et réglage des paramètres (TC, UV) de manière à établir la densité optique de consigne.

**8.** Procédé selon une des revendications 6 ou 7, dans lequel, pour la stabilisation du relief de potentiel (UR) et pour le réglage de l'encrage, on utilise les mêmes surfaces d'éclairement et de mesure.

**9.** Appareil pour la production d'une macrorégion de charge pouvant être encrée à l'aide de moyens (E) de dépôt de toner, limitée par une limite d'encrage (EG), de tracé réglable, sur un photoconducteur (F) appartenant à un appareil d'impression ou de reproduction, la macrorégion de charge étant composée de microrégions de charge adjacentes, comprenant :

- au moins une source lumineuse (LED) commandée en ce qui concerne son éclairement (H) et sa position de rayonnement sur le photoconducteur (F), avec une distribution d'éclairement qui est calculée de manière qu'en partant d'un centre (A) de plus fort éclairement, l'éclairement décroisse vers l'extérieur de façon homogène,

- un dispositif destiné à former un relief de potentiel électrostatique (UR) et à fixer la limite d'encrage (EG) en fonction de signaux de données qui caractérisent la dimension et l'emplacement de la macrorégion de charge sur le photoconducteur, par production de microrégions de charge adjacentes de dimensions variables, le tracé de cette limite d'encrage étant fixé par un niveau de tension de polarisation (UB) sur le relief de potentiel (UR), le dispositif comprenant :

- des moyens (DC, DA) de commande de sources lumineuses qui sont couplés aux sources lumineuses (LED) pour la commande de l'éclairement,

- des moyens (BIAS) de commande de la tension de polarisation pour appliquer une tension de polarisation (UB) de valeur réglable entre les moyens de dépôt de toner (E) et le photoconducteur (F), et

- des moyens (DA, DC, DVA) servant à fixer la limite d'encrage (EG) en activant en fonction de signaux de données, des moyens (DC, DA) de commande des sources lumineuses et/ou des moyens (BIAS) de commande de la tension de polarisation.

10. Appareil selon la revendication 9, dans lequel il est prévu, comme source lumineuse (DK), un peigne optique comprenant une pluralité de sources lumineuses (LED) activées individuellement.

11. Appareil selon la revendication 9, dans lequel il est prévu, comme source lumineuse (DK), un rayon laser pouvant être positionné à l'aide d'un dispositif directionnel.

12. Appareil selon une des revendications 9 à 11, comprenant un dispositif de réglage stabilisant le relief de potentiel, dans lequel le dispositif de réglage comprend:

- un capteur de potentiel (PS) pour capter le niveau d'un potentiel de charge prédéterminable (UA) du photoconducteur, et pour capter un potentiel de charge réel (U) produit sur le photoconducteur avec un motif d'éclairement normal, par éclairement du photoconducteur (F) mis à la valeur de potentiel prédéterminable (UA) ;
- un dispositif de réglage (PSR) couplé au capteur de potentiel (PS) et aux moyens (DA, DC) de commande de sources lumineuses, qui règle le potentiel de charge prédéterminé (UA) du photoconducteur en fonction d'une comparaison entre valeur de consigne et valeur réelle des potentiels de charge, et/ou régle le niveau d'éclairement des sources lumineuses (LED) de telle manière que, lors d'un éclairement avec le motif de l'éclairement normal, il s'établisse un potentiel de charge de consigne (UZ) sur le photoconducteur (F).

13. Appareil selon une des revendications 9 à 12, comprenant un dispositif qui règle l'encrage du relief de potentiel (UR), dans lequel le dispositif comprend :

- des moyens (DS) pour capter la densité optique (D) d'une marque de toner produite sur le photoconducteur (F) avec utilisation d'un motif d'éclairement normal ;
- un dispositif (ER) de réglage de l'encrage couplé aux moyens capteurs (DS) et aux groupes d'une station de développement (E) qui influent sur le processus de développement, lequel dispositif règle, en fonction d'une comparaison entre valeur de consigne et valeur réelle de la densité optique (D) de la marque de toner, des paramètres du processus de développement, tels que la concentration de toner (DC) et la tension de polarisation (UB), de manière à obtenir l'établissement de la densité optique de consigne.

14. Appareil selon une des revendications 9 à 13, comprenant :

- des éléments de commande (20) associés aux sources lumineuses (LED), qui actionnent les sources lumineuses ;
- un dispositif compteur (18) commandé cycliquement, pouvant être couplé aux éléments de commande (20) ;
- une mémoire (16) pouvant être couplée au dispositif compteur (18), pour recevoir des mots de données qui caractérisent l'éclairement (H) de chaque source lumineuse (LED), et
- un dispositif de commande (15) qui établit à l'avance, pour la commande des sources lumineuses (LED), les états de compteur du dispositif compteur (18) en fonction des mots de données mémorisés dans la mémoire (16) et qui, ensuite, par des cycles du dispositif compteur (18), active les sources lumineuses (LED) en fonction des états du compteur, par l'intermédiaire des éléments de commande (20).

15. Appareil selon une des revendications 9 à 14, comprenant des sources de courant (20) commandées en tension, associées aux sources lumineuses (LED), qui règlent le niveau d'éclairement des sources lumineuses (LED) en fonction d'une intensité excitatrice (I) engendrée par les sources de courant (20).

16. Appareil selon les revendications 14 et 15, comprenant :

- un dispositif de mémoire additionnel (17), pouvant être couplé à la mémoire (16), pour recevoir des mots de données associés à des informations d'égalisation des sources lumineuses, et
- un dispositif générateur de tension (19) pouvant être couplé aux sources de courant (20) commandées en tension et au dispositif de mémoire additionnel (17), et qui engendre, en fonction des mots de données, des tensions de commande (v) pour les sources de courant (20).

FIG 1

MIK

MAK

FIG 2

FIG 3

FIG 4

FIG 5

FIG 6

FIG 7

FIG 8

FIG 9

FIG 10

FIG 11

DRUCKKOPF-ANSTEUERUNG

DRUCKKOPF-CONTROLLER

COMPUTERLINE

SPEICHER-BANK 1          10/1

SPEICHER-BANK 2          10/2

SPEICHER-BANK 3          10/3

MIKROCONTROLLER          11

REGISTER (16BIT) PARALLEL-SERIENWANDLER          13

STEUERLOGIK          15

SPANNUNGS-STABILISIERUNG

16

MIKROPIXEL-DATEN

STEUER-LEITUNGEN

STROMZUFUHR

LED 1...64

LED 1...128

64

64

IC-B          14/1

IC-B          14/2

DRUCKKOPF

DA          12          DC

23          EP 0 683 954 B1

EP 0 683 954 B1

# FIG 12

FIG 13

FIG 14